# EUROPÄISCHE PATENTSCHRIFT

(11) **EP 3 307 021 B1**
(45) Veröffentlichungstag und Bekanntmachung des Hinweises auf die Patenterteilung: **27.10.2021**
(21) Anmeldenummer: 17193930.9
(22) Anmeldetag: 29.09.2017
(51) Int. Cl.: H05B 7/148, G01B 7/004

(54) **VERFAHREN ZUR POSITONSBESTIMMUNG DER SPITZE EINER ELEKTROOFEN-ELEKTRODE, INSBESONDERE EINER SÖDERBERG-ELEKTRODE**
METHOD FOR DETERMINING THE POSITION OF THE TIP OF AN ELECTRIC FURNACE ELECTRODE, IN PARTICULAR OF A SODERBERG ELECTRODE
PROCÉDÉ DE DÉTERMINATION DE LA POSITION DE L'EXTRÉMITÉ D'UNE ÉLECTRODE DE FOUR ÉLECTRIQUE, EN PARTICULIER D'UNE ÉLECTRODE DE TYPE SÖDERBERG

(30) Priorität: 05.10.2016 DE 102016219261
(43) Veröffentlichungstag der Anmeldung: 11.04.2018
(73) Patentinhaber: Fraunhofer-Gesellschaft zur Förderung der angewandten Forschung e.V., 80686 München (DE)
(72) Erfinder: Jäckel, Patrick, 66583 Spiesen-Elversberg (DE); Niese, Frank, 66125 Saarbrücken (DE); Rabe, Ute, 66119 Saarbrücken (DE)
(74) Vertreter: Rösler, Uwe

(56) Entgegenhaltungen:
- EP-A1- 0 306 417
- EP-A1- 2 824 408
- WO-A1-2007/009924
- DE-A1- 2 615 202
- DE-A1-102005 034 378

## Beschreibung

### Technisches Gebiet

Die Erfindung bezieht sich auf ein Verfahren zur Positionsbestimmung der Spitze einer Elektroofen-Elektrode, insbesondere in Form einer Söderberg-Elektrode, die in einen mit Füllmaterial befüllten Trogbehälter hineinragt und überwiegend im Wege einer elektrischen Widerstandsheizung zwischen der Spitze der Elektroofen-Elektrode und dem Füllmaterial eine Material-Schmelze sowie ein Maximum wenigstens eines räumlich graduell veränderlichen, physikalischen Parameterfeldes ausbildet.

### Stand der Technik

Elektro-Hochöfen, die insbesondere zur Aluminium-, Silizium- oder Calciumcarbidherstellung ausgebildet sind, verfügen über Elektroofen-Elektroden, häufig in Form so genannter Söderberg-Elektroden, deren Elektrodenspitzen bzw. untere Elektrodenenden in einen mit Füllmaterial angefüllten Trogbehälter hineinragen. Zwischen der Elektrode und wenigstens einer am Trogbehälter angebrachten Gegenelektrode wird eine elektrische Spannung angelegt, die zu einem Stromfluss zwischen der Elektrode und der Gegenelektrode durch das Füllmaterial führt. Die im Wege des elektrischen Widerstandes des Füllmaterials sowie sich der innerhalb des Füllmaterials ausbildenden Lichtbögen frei werdende elektrische Heizleistung bringt das Füllmaterial lokal zur Schmelze und setzt chemische Reaktionen und Prozesse in Gang.

Die innerhalb des Trogbehälters auftretenden elektrischen Ströme sowie auch hohen Temperaturen verursachen an der Elektrodenspitze eine Degradation, die sich durch einen lokalen Materialabtrag bzw. -abbrand auszeichnet und die Lage bzw. Position der Elektrodenspitze mit andauerndem Schmelzprozess verändert. Diese Lageänderung gilt es zu kompensieren, indem die Position der Elektrode entsprechend nachgeregelt wird. Die Lage der Elektrode, insbesondere die Position der in das aufgeschmolzene Füllmaterial innerhalb des Trogbehälters hineinragende Elektrodenspitze ist für den gesamten Hütten- bzw. Aufschmelzprozess von entscheidender Bedeutung, da hiervon der Energieverbrauch des Elektroofens sowie die thermische sowie auch chemische Stabilität des Prozesses abhängen.

Die in vielen Elektroöfen eingesetzte Söderberg-Elektrode besteht typischerweise aus einem 1mm bis 2mm starken, zylinderförmigen Blechmantel, der einen zylindrischen Hohlraum radial begrenzt, der mit einer geeignet zusammengesetzten Elektrodenmasse verfüllt ist. Während des Betriebes brennt die Elektrodenspitze kontinuierlich ab, weswegen die gesamte Elektrode über eine Nachsetzvorrichtung für eine weitgehend gleich bleibende Positionierung der Elektrodenspitze innerhalb des Trogbehälters nachgeführt wird. Zur Kompensation des durch Abbrand immer kürzer werdenden Elektrodenkörpers wird während des Betriebes an dem der Elektrodenspitze gegenüberliegenden oberen Ende der Elektrode regelmäßig ein neuer Blechmantel angeschweißt, der entsprechend mit in loser Form vorliegender Elektrodenmasse verfüllt wird, die bei Erwärmung plastifiziert.

Trotz vielfältiger Lösungsansätze stellt es nach wie vor eine große Herausforderung dar, die exakte Position und Lage der Elektrode, insbesondere der Elektrodenspitze innerhalb des Hochofenprozesses zu bestimmen.

Die Druckschriften US 6,115,404 oder US 7,180,931 B1 beschreiben hierzu ein Verfahren, bei dem der zwischen der Elektrode und der im Trogbehälter vorgesehenen Gegenelektrode fließende elektrische Strom gemessen wird um die Höhe bzw. die Lage der Elektrodenspitze relativ zum Füllmaterial innerhalb des Druckbehälters zu regeln.

Die Druckschrift US 4,303,797 beschreibt ein Steuerungs-Verfahren zur Nachregelung der Elektrode relativ zu dem in Schmelze gebrachten Füllmaterials mit Hilfe eines mathematischen Modells, in das das Gewicht der Elektrode sowie weitere elektrische Größen einfließen.

Die Druckschrift US 4,698,824 beschreibt ein Verfahren zum Steuern eines elektrothermischen Vorganges, bei dem eine Mehrzahl von Söderberg-Elektroden eingesetzt werden, deren Position und Lage auf der Grundlage eines in die Elektroden eingekoppelten Wechselstromes sowie einer damit gemessenen Impedanz erfasst und entsprechend kontrolliert werden.

Die Druckschrift DE 10 2004 022 579 A1 offenbart ein Verfahren zur Bestimmung der Elektrodenlänge einer Söderberg-Elektrode, bei dem ein Wellenleiter oder eine Messleitung längs der Elektrode eingebettet ist, die gemeinsam mit der Elektrode einem Abbrandprozess unterliegt. Durch Messung der Laufzeit eines längs des Wellenleiters oder längs der Messleitung eingekoppelten Signals, kann auf die Länge der Elektrode geschlossen werden.

Die Druckschrift EP 2 594 112 B1 offenbart ein Verfahren zur Messung der Länge einer Elektrode bzw. der Bestimmung der Position eines Verbrauchsquerschnittes der Elektrode in einem Elektroofen, bei dem die Messung mittels Radar erfolgt. Hierbei wird ein Radarsignal längs der Elektrode eingekoppelt und dessen Laufzeit gemessen, die als Grundlage für die Längenbestimmung der Elektrode herangezogen wird.

Die Druckschrift US 4,843,234 erläutert eine Längenmessung einer Abbrandelektrode, längs der eine optische Faser geführt ist, die zur optischen Laufzeitmessung dient.

Kritisch bei allen Elektrodenlängenbestimmungen, die auf Signallaufzeitmessungen beruhen ist der Umstand, dass Abbrandelektroden bereits oberhalb der Verbrauchszone sehr heiß werden, weshalb sichergestellt werden muss, dass der jeweilige in Einsatz befindliche Signalleiter nicht schon vorher, oder später, sondern genau am Ende der Elektrode schmilzt oder abbricht. Ferner gilt es, den entsprechend gewählten Signalleiter in der gleichen Weise zu verlängern, mit dem das bei jedem Abbrand verbrauchte Elektrodenmaterial entsprechend ersetzt wird. Dies trägt zu einem nicht zu vernachlässigenden zusätzlichen Verfahrens- und Kostenaufwand bei.

Die Druckschrift DE 693 20 564 T2 offenbart einen Gleichstromlichtbogenofen mit Steuerung der Lichtbogenlenkung. Zur Positionsfeststellung des Lichtbogens, der dem Ort der Spitze einer in einen Trogbehälter hineinragenden Elektroofen-Elektrode entspricht, dienen ein optischer, magnetischer und/oder ein thermischer Sensor.

Die Druckschrift US 4,843,234 beschreibt eine Vorrichtung zur Elektrodenlängenmessung einer in eine Materialschmelze hineinragenden Elektrode, die einen optischen Sensor einsetzt.

Die Druckschrift DE 10 2004 022 579 A1 offenbart ein Verfahren zur Bestimmung der Elektrodenlänge einer in einem Elektrolichtbogenofen verbrauchenden Elektrode, beim dem die Elektrode als Wellenleiter dient, längs dem eine Laufzeitmessung der sich längs des Wellenleiters ausbreitenden Lichtsignale vorgenommen wird.

Der Einsatz von Radarwellen zur Elektrodenlängenbestimmung anstelle von Lichtsignalen, wie vorstehend erwähnt, wird in der Druckschrift EP 2 594 112 B1 im Zusammenhang mit Elektrolichtbogenofen-Elektroden erläutert.

Die Druckschrift WO 2009/095396 A1 offenbart ein Verfahren zur Ermittlung eines Strahlenmaßes für eine von einem zwischen einer Elektrode und Schmelzgut brennenden Lichtbogen ausgehende auf eine Begrenzung eines Lichtbogenofens treffende thermische Strahlung, wobei mittels entfernt angebrachte Sensoren Körperschall-Schwingungen erfasst werden.

Aus WO 2007/009924 A1 ist ein Verfahren zur Bestimmung einer Zustandsgröße eines Elektrolichtbogenofens, insbesondere der Höhe der Schaumschlacke, bekannt, bei dem Körperschall, der durch die Leistungseinkopplung an den Elektroden erzeugt wird, durch außen an der Wand des Elektrolichtbogenofens angebrachte Sensoren erfasst wird. Aus den Körperschallsignalen und elektrischen Signalen, die ein Maß für die Energiezufuhr über die Elektroden sind, wird eine Übertragungsfunktion gewonnen, über die die Höhe der Schaumschlacke ermittelt wird. Unter Zuhilfenahme der Zustandsgröße (Höhe der Schaumschlacke) können Regel- und/oder Steuersignale für die Position der Elektroden, d.h. zur Absenkung oder Anhebung der Elektroden, gewonnen werden,

In EP 2 824 408 A1 wird die Position eines Elektrodentragarms mittels optischer, mechanischer oder magnetischer Verfahren offenbart. Aus der Elektrodentragarmposition wird die Lichtbogenposition berechnet.

Aus EP 0 306 417 A1 geht ein Verfahren zur Bestimmung der Positionen eines sich zwischen den Spitzen zweier Elektroden ausbildenden Lichtbogens und der Elektrodenspitzen hervor, Dazu werden außerhalb des Gefäßes mittels Magnetfeldsensoren, die beispielsweise an einem vertikalen Mast, der zu beiden Elektroden gleich weit entfernt ist, die vertikalen und horizontalen Magnetfeldkomponenten gemessen. Das Maximum der vertikalen Magnetfeldkomponenten und das Minimum der horizontalen Magnetfeldkomponenten fallen in einer im Wesentlichen horizontalen Ebene zusammen, die den Lichtbogen zwischen den Elektrodenspitzen enthält.

In DE 10 2005 034378 A1 wird ein Verfahren zur Bestimmung der Beschaffenheit des Inhalts eines Lichtbogenofens, wie z.B. Stückigkeit und/oder Lage des Einsatzgutes oder Orte maximaler oder minimaler Dichte des Einsatzgutes offenbart, bei dem akustische Signale, die durch den Lichtbogen erzeugt und vom Einsatzgut, z.B. Schrott, abgelenkt und an die Wandung des Ofenbehälters weitergeleitet werden. Die Informationen über die Beschaffenheit des Inhalts des Lichtbogenofens kann zum Regeln der Position der Elektroden verwendet werden.

Aus DE 26 15 202 A1 ist ein Verfahren zur Regelung der Energiezufuhr von Elektroöfen bekannt, bei dem mittels oberhalb der Schlackenzone angeordneter Infrarot-Taster Thermobilder von der heißen Außenwandung aufgenommen werden, durch die auf den Verschleiß einer feuerfesten Zustellung rückgeschlossen werden kann.

Schließlich ist in der Druckschrift US 4,698,824 ein Verfahren zur Positionssteuerung einer Ofenelektrode anhand einer erfassten elektrischen Impedanz erläutert.

### Darstellung der Erfindung

Der Erfindung liegt die Aufgabe zugrunde ein Verfahren zur Positionsbestimmung der Spitze einer Elektroofen-Elektrode, insbesondere einer Söderberg-Elektrode, die in einem mit Füllmaterial befüllten Druckbehälter hineinragt und mittels elektrisch initiierten Lichtbogeneffekt und/oder im Wege einer elektrischen Widerstandsheizung zwischen der Spitze der Elektroofen-Elektrode und dem Füllmaterial eine Material-Schmelze sowie ein Maximum wenigstens eines räumlich graduell veränderlichen, physikalischen Parameterfeldes ausbildet, dadurch weiterzubilden, so dass eine Lage- bzw. Positionserfassung der Elektroofen-Elektrodenspitze exakt möglich wird und dies ohne großen verfahrenstechnischen und kostenrelevanten Aufwand. Auch soll es möglich sein, die hierzu zu treffenden Maßnahmen an bereits in Betrieb befindlichen Elektrohochöfen nachträglich zu installieren.

Die Lösung der der Erfindung zugrundeliegenden Aufgabe ist im Anspruch 1 angegeben. Den Erfindungsgedanken in vorteilhafter Weise ausbildende Merkmale sind Gegenstand der Unteransprüche sowie der weiteren Beschreibung, insbesondere unter Bezugnahme auf die Erläuterung der Ausführungsbeispiele zu entnehmen.

Der Erfindung liegt die Erkenntnis zugrunde, dass der elektrisch initiierte Abbrandprozess an der Elektrodenspitze mit der prozessbedingten Erzeugung eines räumlich graduell veränderlichen, physikalischen Parameterfeldes, das sich als Skalar- oder Vektorfeld auszeichnet und am Ort der Elektrodenspitze jeweils ein Parameterwertmaximum ausbildet.

Lösungsgemäß wird das wenigstens eine Parameterfeld im Bereich der sich innerhalb des Trogbehälters ausbildenden Schmelze räumlich aufgelöst sensorisch detektiert und anschließend numerisch rekonstruiert. Auf der Grundlage des wenigstens einen rekonstruierten Parameterfeldes wird im Weiteren die räumliche Position der Spitze der Elektroofen-Elektrode ermittelt, mit der schließlich eine exakte Elektrodennachführung zum Zwecke einer gleichbleibenden Position der Elektrodenspitze während des Schmelzprozesses vorgenommen werden kann.

Im Rahmen des erläuterten Elektrodenabbrandprozesses treten mehrere räumlich graduell veränderliche physikalische Parameterfelder in Erscheinung, die Ihre Ursache im elektrischen Stromfluß, in der lokalen Freisetzung von Heizleistung oder in der Ausbildung von Lichtbögen haben, um nur einige physikalische Quellen für die Feldausbildung zu nennen.

Im Einzelnen betrifft dies die Ausbildung eines elektrischen, eines magnetischen sowie eines elektromagnetischen Feldes sowie auch eines Temperaturfeldes und gegebenenfalls eines akustischen Schallfeldes. Alle vorstehend genannten räumlich graduell veränderlichen physikalischen Parameterfelder besitzen am Ort der Elektrodenspitze ein Feldmaximum und lassen sich mit entsprechend gewählten Sensoren messtechnisch erfassen.

In vorteilhafter Weise wird zur Verbesserung der Messgenauigkeit sowie der darauf beruhenden Qualität der Positionsbestimmung der Elektrodenspitze der durch die Elektrode anliegende elektrische Stromfluss moduliert.

Dem Fachmann sind numerische Feldrekonstruktionsalgorithmen bekannt, die einer numerischen Auswertung der messtechnisch erfassten physikalischen Feldparameter zugrundegelegt werden, um das jeweilige physikalische Parameterfeld räumlich zu rekonstruieren. In Kenntnis des rekonstruierten Parameterfeldes ist eine exakte Positionsbestimmung der Elektrodenspitze möglich. Auch die in diesem Zusammenhang erforderlichen numerischen Koordinatentransformationen zwischen dem rekonstruierten Parameterfeld und der realen Prozeßumgebung sind dem Fachmann bekannt.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Schematisierte Darstellung eines Druckbehälters mit angebrachten Sensoren sowie
- Fig. 2: Darstellung einer Prozessanordnung zur Positionsbestimmung der Elektrodenspitze mittels Thermographie oder Strahlungsdetektor.

### Wege zur Ausführung der Erfindung, gewerbliche Verwendbarkeit

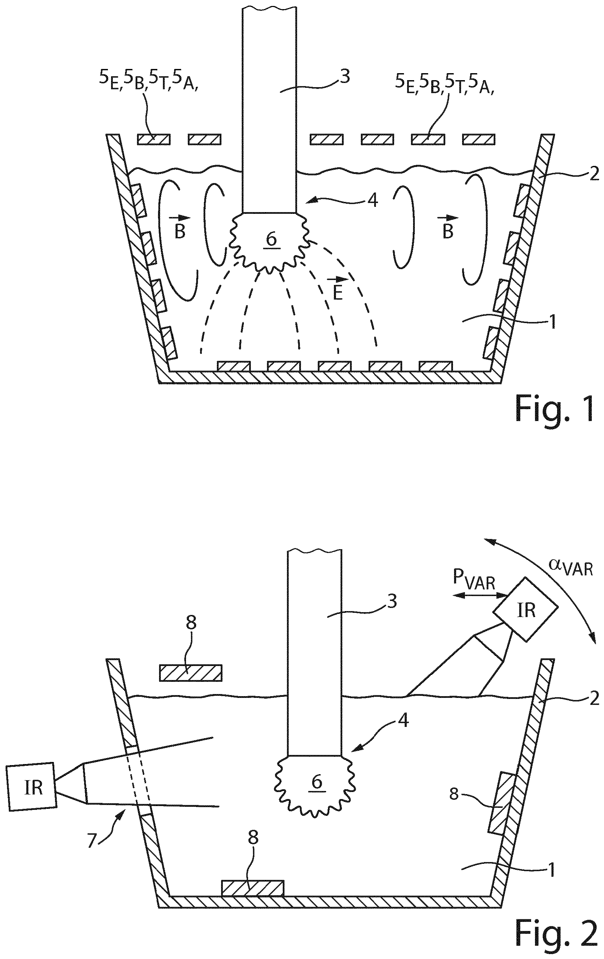

Figur 1 illustriert einen Querschnitt durch einen schematisierten, mit Füllmaterial 1 angefüllten Trogbehälter 2, in dem von oben eine Elektrode 3 hineinragt, die ein unteres Elektrodenende, die so genannte Elektrodenspitze 4 aufweist. Zwischen der Elektrode 3 und dem Trogbehälter 2 wird eine elektrische Spannung angelegt, die ein charakteristisches, elektrisches Feld, E-Feld, ausbildet. Da die Elektrode 3 sowie das umgebende Füllmaterial 1 über stark unterschiedliche Leitfähigkeiten verfügen, bildet sich am Ort der Elektrodenspitze 4 die maximale Feldstärke des E-Feldes aus.

Durch eine Vielzahl vorzugsweise an der Innenwand des Trogbehälters 2 und/oder auch an oder über der Oberfläche des Füllmaterials 1 angebrachte Sensoren 5_{E} kann das sich ausbildende elektrische Feld, E-Feld, räumlich aufgelöst gemessen werden. Auf der Grundlage von für einen Fachmann bekannten Algorithmen sowie den messtechnisch erfassten, das E-Feld repräsentierenden Messwerten wird die E-Feld-Verteilung numerisch rekonstruiert, so dass die exakte Position der Elektrodenspitze 4 relativ zum Trogbehälter 2 bestimmbar ist.

Mit der bekannten Position der Elektrodenspitze 4 innerhalb des Trogbehälters 2 lässt ich eine exakte Nachführung der Elektrode 3 realisieren, die eine konstante Lage und Position der Elektrodenspitze 4 trotz Elektrodenabbrand gewährleistet.

In gleicher Weise lässt sich durch alternatives oder zusätzliches entsprechendes Vorsehen von Magnetfeldsensoren 5_{B} die magnetische Feldverteilung eines B-Feldes um die Elektrodenspitze 4 messtechnisch erfassen und nachträglich numerisch rekonstruieren.

Wie bereits vorstehend erwähnt lässt sich die Messaussage qualitativ verbessern, indem die Stromzufuhr über die Elektrode 3 moduliert wird, beispielsweise indem ein frequenzabhängiges Signal auf die Elektrodenspannung aufmoduliert wird.

In gleicher Weise, gemäß der sich ein Maximum des elektrischen oder auch magnetischen Feldes am Ort der Elektrodenspitze 4 ausbildet, ist davon auszugehen, dass sich auch am Ort der Elektrodenspitze 4 der Bereich der höchsten Temperatur innerhalb des Trogbehälters ausbildet. So bildet sich im Wege der elektrischen Widerstandsheizung unmittelbar um die Elektrodenspitze 4 eine Schmelze 6 des Füllmaterials 1 aus, deren Temperatur mit zunehmendem Abstand zu der Elektrodenspitze 4 abnimmt. In gleicher Weise wie bei der vorstehend beschriebenen Messung der räumlichen Verteilung eines sich ausbildenden elektrischen oder magnetischen Feldes können alternativ oder in Kombination Temperaturfühler 5_{T} an der Innenwand des Trogbehälters und/oder an oder oberhalb der Oberfläche des Füllmaterials 1 angeordnet werden, um das sich ausbildende Temperaturfeld innerhalb des Trogbehälters 1 räumlich aufgelöst zu vermessen.

Ein weiterer alternativer Ansatz zur Vermessung des sich ausbildenden Temperaturfeldes innerhalb des Trogbehälters 2 basiert auf der Nutzung thermographischer Messtechniken. Hierzu wird die Temperaturverteilung an der Oberfläche des Füllmaterials 1 und/oder längs wenigstens einer Seitenwand des Trogbehälters 2 mit geeignet angeordneten Infrarotkameras IR erfasst. Die Seitenwand des Trogbehälters 2 weist hierzu ein geeignetes IR-Fenster 7 auf, durch das eine thermographische Erfassung mit seitlicher Blickrichtung zur Elektrodenerstreckung innerhalb des Trogbehälters 2 möglich wird. Die höchsten Temperaturen im Bereich der Elektrodenspitze 4 zeichnen sich bei einer Betrachtung von der Seite gleichfalls in einem Maximum in der thermographisch erfassten Temperaturverteilung ab. Gleichwohl das erfasste Temperaturmaximum aufgrund thermischer Diffusion verschmiert in Erscheinung tritt, bleibt die Position des Maximums eindeutig erfassbar, so dass der heißeste Bereich, also der Bereich der Elektrodenspitze 4 ausreichend genau lokalisiert werden kann.

Alternativ oder in Kombination bietet es sich an, thermographische Aufnahmen mit Hilfe einer IR-Kamera schräg durch die Oberfläche des Füllmaterials 2 vorzunehmen, um auf diese Weise eine Tiefbestimmung der maximalen Temperatur und somit der Elektrodenspitze 4 durchzuführen. Zur Erfassung der räumlichen Temperaturverteilung mit einer derart schrägen Aufsichtmethode sind mehrere Aufnahmen mit unterschiedlichen Betrachtungswinkeln αᵥₐᵣ und unterschiedlichen Kamerapositionen Pᵥₐᵣ erforderlich.

Auch im Falle der Durchführung einer thermographischen Vermessung des Temperaturfeldes ist es vorteilhaft, die Stromzuführung über die Elektrode 3 zu modulieren, wodurch eine zeitliche Variation der Temperaturverteilung erzielt wird, die in vorteilhafter Weise mit Hilfe einer Lock-In-Thermographie erfasst und ausgewertet werden kann. Auf diese Weise lässt sich die Positionsbestimmung der Elektrodenspitze 4 innerhalb des Füllmaterials 1 exakter vornehmen.

Wie bereits eingangs erwähnt basiert die Heizleistung auf dem elektrischen Widerstand des die Elektrodenspitze umgebenden Füllmaterials, das lokal aufgeschmolzen wird. Zudem treten innerhalb des Füllmaterials Lichtbogenerscheinungen auf, die mit extrem hohen lokalen Strömen von ca. 140.000 Ampere verbunden sind. Der bei diesen hohen elektrischen Strömen auftretende Elektronenfluss umfasst Elektronen hoher kinetischer Energie, die beim Auftreffen auf das zu schmelzende Füllmaterial 1 in Wärme umgesetzt wird, wodurch das Füllmaterial 1 in Schmelze 6 gelangt. Ein Teil der kinetischen Energie geht jedoch in Strahlungsenergie, vorwiegend in Form von Röntgenstrahlung über. Diese Erscheinungen treten nach diesseitigem Verständnis nur in unmittelbarer Umgebung um die Elektrodenspitze 4 auf. Somit ist es möglich, durch geschicktes Adaptieren von wenigstens drei räumlich separierten Röntgendetektoren 8 an der Innenseite des Trogbehälters 2, dem Boden des Trogbehälters 2 und/oder an der Oberfläche des Füllmaterials 1 die emittierte Röntgenstrahlung ortsaufgelöst zu detektieren. In gleicher Weise wie im Falle der vorstehend erläuterten Rekonstruktion des E- oder B-Magnetfeldes dienen die Röntgenstrahlungssignale unter Verwendung geeigneter Algorithmen zur Rekonstruktion eines Röntgenstrahlungsfeldes, das Aufschluss über die Emissionspositionen innerhalb des Trogbehälters 2 und damit verbunden über die Position der Elektrodenspitze 4 zu geben vermag.

Da der Abbrandprozess am Ort der Elektrodenspitze 4 nicht geräuschlos von statten geht, sondern akustische Schallwellen erzeugt, die mit zunehmendem Abstand zur Elektrodenspitze 4 gedämpft werden, ist es alternativ oder in Kombination mit den vorstehend erläuterten E-Feld-Sensoren, B-Feld-Sensoren oder Temperatursensoren, die innerhalb des Trogbehälters 2 und/oder an oder über der Oberfläche des Füllmaterials 1 angeordnet sind, mit entsprechend angeordneten akustischen Sensoren 5_{A} möglich, das akustische Schallfeld räumlich aufgelöst zu vermessen. Die akustischen Messsignale können gleichfalls in der vorstehend erläuterten Weise einer numerischen Rekonstruktion des Schallfeldes zugrunde gelegt werden.

Die akustische Schallfeldvermessung kann überdies in der nachstehenden Weise vorteilhaft modifiziert werden: Die Elektrode 3 vorzugsweise in Form einer Söderberg-Elektrode ist zylindrisch geformt und besitzt in ihrer Mitte zumeist ein Loch, durch das in regelmäßigen Abständen bspw. Feinmöller in den Prozessofen eingeführt wird. Wird brennbares oder explosives Material in diesen Kanal eingeworfen, so fällt das Material zunächst ungestört nach unten, da das Innere der Elektrode feldfrei ist. Sobald das Ende der Elektrode 3 erreicht ist, tritt das brennbare oder explosive Material in das elektrische Feld ein und verbrennt oder explodiert, wobei ein schallakustisches Signal erzeugt wird, das von den vorstehend beschriebenen schallakustischen Sensoren 5_{A} an der Innenwand des Trogbehälters 2 detektiert wird. Aus dem Zeitabstand zwischen dem Abwurf des Materials und dem Auftreten der messtechnisch nachweisbaren schallakustischen Signale kann die Länge der Elektrode berechnet werden. Die vorstehende Methode lässt sich selbstverständlich gleichfalls auch für elektrische, optische und/oder thermische Signale nutzen.

Selbstverständlich ist es möglich, die vorstehenden Messmethoden, die auf der Erfassung elektrischer, magnetischer, elektromagnetischer, thermischer sowie auch akustischer Signale basieren, in geeigneter Weise zu kombinieren, um die Qualität der Positionsbestimmung der Elektrodenspitze zu verbessern.

### Bezugszeichenliste

- 1: Füllmaterial
- 2: Trogbehälter
- 3: Elektrode
- 4: Elektrodenspitze
- 5_{E,B,T,A}: Sensoren
- 6: Schmelze
- 7: IR-Fenster
- 8: Röntgendetektor
- IR: IR-Kamera
- αᵥₐᵣ: Winkelvariation
- Pᵥₐᵣ: Positionsvariation

## Patentansprüche

1. Verfahren zur Positionsbestimmung der Spitze (4) einer Elektroofen-Elektrode (3), die in einen mit Füllmaterial (1) befüllten Trogbehälter (2) hineinragt und mittels elektrisch initiiertem Lichtbogeneffekt zwischen der Spitze (4) der Elektroofen-Elektrode (3) und dem Füllmaterial (1) eine Material-Schmelze (6) sowie ein Maximum wenigstens eines räumlich graduell veränderlichen, physikalischen Parameterfeldes ausbildet,
**dadurch gekennzeichnet, dass** das wenigstens eine Parameterfeld im Bereich der sich innerhalb des Trogbehälters (2) ausbildenden Schmelze (6) räumlich aufgelöst sensorisch detektiert und numerisch rekonstruiert wird, dass auf der Grundlage des wenigstens einen rekonstruierten Parameterfeldes die räumliche Position der Spitze (4) der Elektroofen-Elektrode (3) ermittelt wird.

2. Verfahren nach Anspruch 1,
**dadurch gekennzeichnet, dass** das wenigstens eine räumlich graduell veränderliche, physikalische Parameterfeld ein Skalar- oder ein Vektorfeld ist.

3. Verfahren nach Anspruch 1 oder 2,
**dadurch gekennzeichnet, dass** das wenigstens eine räumlich graduell veränderliche, physikalische Parameterfeld ein der nachfolgenden Parameterfelder betrifft, das jeweils durch einen der nachfolgenden physikalischen Parameter sensorisch gemessen wird:
- elektrisches Feld, dessen elektrische Feldstärke gemessen wird,
- magnetisches Feld, dessen magnetische Feldstärke gemessen wird,
- Temperaturfeld, dessen Temperatur gemessen wird,
- elektromagnetisches Feld, dessen Strahlungsintensität gemessen wird,
- akustisches Feld, dessen Schallintensität gemessen wird.

4. Verfahren nach einem der Ansprüche 1 bis 3,
**dadurch gekennzeichnet, dass** ein durch die Elektrode (3) anliegender elektrischer Stromfluss während der Detektion moduliert wird.

5. Verfahren nach einem der Ansprüche 1 bis 4,
**dadurch gekennzeichnet, dass** als Elektroofen-Elektrode (3) eine Söderberg-Elektrode eingesetzt wird.

## Claims

1. Method for determining the position of the tip (4) of an electric furnace electrode (3) which projects into a trough (2) filled with filling material (1) and, by means of electrically initiated arcing effect between the tip (4) of the electric furnace electrode (3) and the filler material (1), forms a material melt (6) and a maximum of at least one spatially gradually variable physical parameter field, **characterized in that** the at least one parameter field in the region of the melt (6) that forms within the trough (2) is detected by sensors in spatially resolved manner and reconstructed digitally, that the spatial position of the tip (4) of the electric furnace electrode (3) is determined on the basis of the at least one reconstructed parameter field.

2. Method according to claim 1, **characterized in that** the at least one spatially gradually variable physical parameter field is a scalar or vector field.

3. Method according to Claim 1 or 2, **characterized in that** the at least one spatially gradually variable physical parameter field relates to one of the following parameter fields, each of which is by sensors via one of the following physical parameters:
- electric field whose electric field strength is measured,
- magnetic field whose magnetic field strength is measured,
- temperature field whose temperature is measured,
- electromagnetic field whose radiation intensity is measured,
- acoustic field whose sound intensity is measured.

4. Method according to any one of Claims 1 to 3, **characterized in that** an electric current flow through the electrode (3) is modulated during the detection.

5. Method according to any one of Claims 1 to 4, **characterized in that** a Söderberg electrode is used as the electric furnace electrode (3).

## Revendications

1. Procédé pour déterminer la position de la pointe (4) d'une électrode de four électrique (3), qui dépasse en saillie dans un récipient creux (2) rempli de matériau de remplissage (1) et, au moyen d'un effet d'arc amorcé électriquement, entre la pointe (4) de l'électrode de four électrique (3) et le matériau de remplissage (1) une masse fondue de matériau (6) ainsi qu'un maximum d'au moins un champ de paramètre physique progressivement variable dans l'espace se forment, **caractérisé en ce que** au moins un champ de paramètre dans la zone de la masse fondue (6) se formant à l'intérieur du récipient creux (2) est détecté avec résolution spatiale par des capteurs et est numériquement reconstruit, de sorte que sur la base d'au moins un champ de paramètre reconstruit la position spatiale de la pointe (4) de l'électrode de four électrique (3) soit déterminée.

2. Procédé selon la revendication 1, **caractérisé en ce que** au moins un champ de paramètre physique variable spatialement graduellement est un champ scalaire ou un champ vectoriel.

3. Procédé selon la revendication 1 ou 2, **caractérisé en ce que** au moins un champ de paramètre physique variable spatialement graduellement concerne un des champs de paramètres suivants, qui est mesuré par des capteurs en utilisant un des paramètres physiques suivants :
- un champ électrique dont l'intensité du champ électrique est mesurée,
- un champ magnétique dont l'intensité du champ magnétique est mesurée,
- un champ de température dont la température est mesurée,
- un champ électromagnétique dont l'intensité de rayonnement est mesurée,
- un champ acoustique dont l'intensité sonore est mesurée.

4. Procédé selon une quelconque des revendications 1 à 3, **caractérisé en ce qu'**à travers l'électrode (3) le flux de courant électrique appliqué est modulé pendant la détection.

5. Procédé selon une quelconque des revendications 1 à 4, **caractérisé en ce qu'**une électrode de type Söderberg est utilisée comme électrode de four électrique (3).
